(19) Europäisches Patentamt
European Patent Office
Office européen des brevets

(11) Veröffentlichungsnummer: **0 303 942 B1**

(12) # EUROPÄISCHE PATENTSCHRIFT

(45) Veröffentlichungstag der Patentschrift: **28.04.93**

(51) Int. Cl.$^5$: **C09B 11/26**, C09B 67/28

(21) Anmeldenummer: **88112919.1**

(22) Anmeldetag: **09.08.88**

(54) **Triarylmethan-Farbbildner.**

(30) Priorität: **21.08.87 DE 3727878**

(43) Veröffentlichungstag der Anmeldung:
**22.02.89 Patentblatt 89/08**

(45) Bekanntmachung des Hinweises auf die Patenterteilung:
**28.04.93 Patentblatt 93/17**

(84) Benannte Vertragsstaaten:
**CH DE FR GB LI**

(56) Entgegenhaltungen:
**FR-A- 2 369 098**
**US-A- 3 752 825**

**CHEMICAL ABSTRACTS, Band 107, Nr. 22, November 1987, Seite 106, Zusammenfassung Nr. 200398a, Columbus, Ohio, US; & JP-A-62 127 353 (MITSUBISHI PAPER MILLS, LTD) 09-06-1987**

**CHEMICAL ABSTRACTS, Band 108, Nr. 14, April 1988, Seite 92, Zusammenfassung Nr. 114213a, Columbus, Ohio, US; & JP-A-62 129 357 (MITSUBISHI PAPER MILLS, LTD) 11-06-1987**

(73) Patentinhaber: **BAYER AG**

**W-5090 Leverkusen 1 Bayerwerk(DE)**

(72) Erfinder: **Eckstein, Udo, Dr.**
**Morgengraben 2**
**W-5000 Köln 80(DE)**
Erfinder: **Psaar, Hubertus, Dr.**
**Paul-Klee-Strasse 21**
**W-5090 Leverkusen 1(DE)**
Erfinder: **Jabs, Gert, Dr.**
**Wingensiefer Kamp 25**
**W-5068 Odenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

**Beschreibung**

Aus C.A. 108:114213a sind Farbbildner bekannt, die sich von denen der vorliegenden Erfindung dadurch unterscheiden, daß sie Phenylgruppen enthalten, die mit Aryl- und/oder Aralkyl-aminogruppen substituiert sind.

Gegenstand der Erfindung sind Farbbildner der allgemeinen Formel

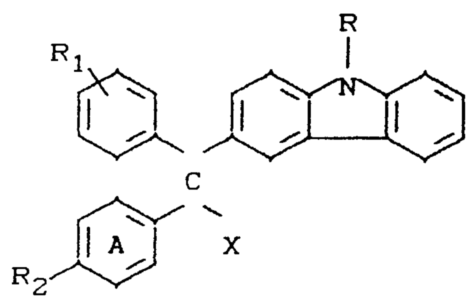

worin

X Hydroxy, Alkoxy, Alkenyloxy, Aralkoxy, Cycloalkoxy, Aryloxy, Acyloxy, Alkylamino, Dialkylamino, Acylamino, Aralkylamino oder Arylamino,

R Alkyl, Alkenyl oder Aralkyl,

$R_1$ Wasserstoff, Halogen oder Alkyl,

$R_2$ Alkoxy, Aralkoxy, Aryloxy oder einen Rest der Formel

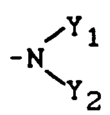

$Y_1$ und $Y_2$ unabhängig voneinander Alkyl, Aryl, Cycloalkyl oder Aralkyl bedeuten, oder

$R_2$ mit A in o-Stellung einen heterocyclischen Ring bildet,

dem Ring A in o-/m-Stellung zu $R_2$ ein Benzolring anelliert sein kann, und der Ring A und seine anellierten Ringe und die cyclischen und acyclischen Reste weitere in der Farbstoffchemie übliche, nichtionische Substituenten tragen können, ihre Herstellung, ihre Verwendung in Thermoreaktivpapieren und druckempfindlichen Aufzeichnungsmaterialien und die Herstellung ihrer hochkonzentrierten Lösungen in organischen Lösungsmitteln aus der Gruppe der gegebenenfalls chlorierten Kohlenwasserstoffe, oder Phthalsäureester sowie die Verwendung dieser Lösungen zur Herstellung von druckempfindlichen Aufzeichnungsmaterialien.

In der Farbstoffchemie übliche nichtionische Substituenten sind z.B. Halogen, Hydroxy, Alkoxy, Alkenyloxy, Aryloxy, Aralkoxy, Cycloalkyloxy, Aryl, Alkylmercapto, Arylmercapto, Aralkylmercapto, Alkylsulfonyl, Cyan, Carbamoyl, Alkoxycarbonyl, Amino, das durch 1 oder 2 Alkyl-, Cycloalkyl-, Aryl- oder Aralkylgruppen substituiert sein kann, bevorzugt zu einem 5- oder 6-gliedrigen Ring, oder dessen Substituenten ringgeschlossen sein können, Acylamino, Alkenyloxy, Alkylcarbonyloxy und Arylcarbonyloxy und als Substituenten der Ringe außerdem Alkyl, Aryl, Aralkyl, Alkenyl oder Arylvinyl.

Alkyl steht für $C_1$-$C_{30}$-Alkyl insbesondere für $C_1$-$C_{12}$-Alkyl.

Die Alkylreste und die Alkylreste in Alkoxy-, Alkylthio-, Alkylamino-, Alkanoylamino-, Alkylsulfonyl- und Alkoxycarbonylgruppen können verzweigt und beispielsweise durch Fluor, Chlor, $C_1$- bis $C_4$-Alkoxy, Cyano oder $C_1$-$C_4$-Alkoxycarbonyl substituiert sein.

Aralkyl ist insbesondere Phenyl-$C_1$- bis -$C_4$-alkyl, das im Phenylkern durch Halogen, $C_1$- bis $C_4$-Alkyl und/oder $C_1$-bis $C_4$-Alkoxy substituiert sein kann.

Cycloalkyl ist insbesondere gegebenenfalls durch Methyl substituiertes Cyclopentyl oder Cyclohexyl.

Alkenyl ist insbesondere $C_2$-$C_5$-Alkenyl, das durch Hydroxy, $C_1$- bis $C_4$-Alkoxy, Cyan, $C_1$- bis $C_4$-Alkoxycarbonyl, Chlor oder Brom monosubstituiert sein kann. Bevorzugt sind Vinyl und Allyl.

Halogen ist insbesondere Fluor, Chlor und Brom, vorzugsweise Chlor.

Aryl ist insbesondere gegebenenfalls durch ein bis drei $C_1$- bis $C_4$-Alkyl, Chor, Brom, Cyan, $C_1$- bis $C_4$-Alkoxycarbonyl oder $C_1$- bis $C_4$-Alkoxy substituiertes Phenyl oder Naphthyl.

Alkoxy ist insbesondere gegebenenfalls durch Chlor oder $C_1$-$C_4$-Alkoxy substituiertes $C_1$-$C_{12}$-Alkoxy.

Acyl ist insbesondere $C_1$- bis $C_4$-Alkylcarbonyl und $C_1$- bis bis $C_4$-Alkoxycarbonyl, gegebenenfalls durch $C_1$-$C_4$-Alkyl, Phenyl oder Benzyl, mono- oder di-substituiertes Aminocarbonyl oder Aminosulfonyl.

Alkoxycarbonyl ist insbesondere gegebenenfalls durch Hydroxy, Halogen oder Cyan substituiertes $C_1$- bis $C_4$-Alkoxycarbonyl.

Die Ringe können durch nichtionische Substituenten, insbesonder durch $C_1$-$C_4$-Alkyl, $C_1$-$C_4$-Alkoxy, Cyan, Nitro oder Halogen substituiert sein.

Von den Farbbildnern der Formel (I) haben die Verbindungen der Formel

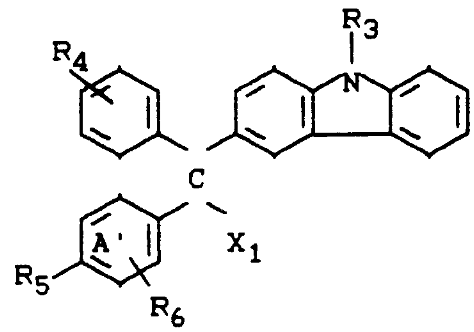

(II)

besondere Bedeutung, worin

| | |
|---|---|
| $X_1$ | Hydroxy, gegebenenfalls durch $C_1$-$C_4$-Alkoxy substituiertes $C_1$-$C_{12}$-Alkoxy oder Benzyloxy, |
| $R_3$ | $C_1$-$C_{12}$-Alkyl oder Benzyl, |
| $R_4$ | Wasserstoff, Chlor, $C_1$-$C_{12}$-Alkyl, |
| $R_5$ | $C_1$-$C_{12}$-Alkoxy, Benzyloxy, Phenoxy oder einen Rest der Formel |

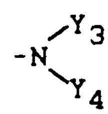

| | |
|---|---|
| $R_6$ | Wasserstoff, Chlor, $C_1$-$C_{12}$-Alkyl, $C_1$-$C_{12}$-Alkoxy, $C_1$-$C_4$-Alkylamino oder Di-$C_1$-$C_{12}$-Alkylamino, |
| $Y_3$ und $Y_4$ | unabhängig voneinander gegebenenfalls durch Chlor, Cyano, $C_1$-$C_4$-Alkoxycarbonyl oder $C_1$-$C_4$-Alkoxy substituiertes $C_1$-$C_{12}$-Alkyl, Cyclohexyl, Phenyl oder Benzyl, die durch Chlor, $C_1$-$C_4$-Alkyl oder $C_1$-$C_4$-Alkoxy substituiert sein können, oder |
| $R_5$ und $R_6$ | Glieder, die zusammen mit Ring A' zur Vervollständigung eines Ringssystems der folgenden Formel |

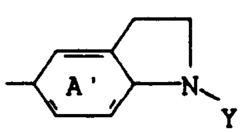

,

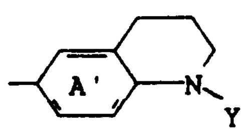

,

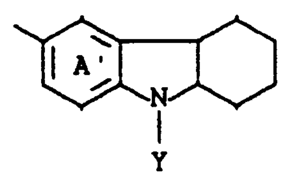

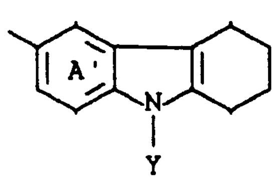

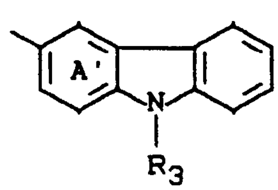

erforderlich sind, bedeuten, worin

Y für $C_1$-$C_{12}$-Alkyl, Cl-$C_2$-$C_4$-alkyl, $C_1$-$C_4$-Alkoxy-$C_2$-$C_4$-alkyl, Phenyl oder Benzyl steht und der gesättigte Ringteil bis zu 4 Reste aus der Gruppe Chlor, Methyl, Ethyl, Methoxy, Ethoxy oder Phenyl tragen kann.

Beispiele für im gesättigten Ring substituierte Reste sind:

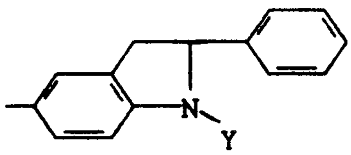
,
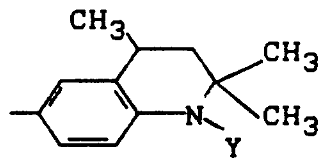
,

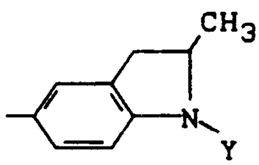
oder
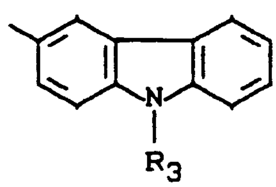

Besonders bevorzugt werden Farbbildner der Formel

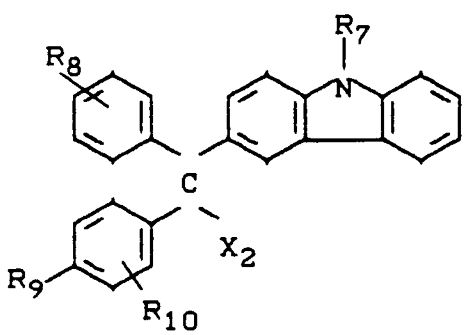
(III)

worin

X2 Hydroxy oder $C_1$-$C_{12}$-Alkoxy,

R7 $C_1$-$C_{12}$-Alkyl,

R8 Wasserstoff, Chlor, $C_1$-$C_{12}$-Alkyl,

R9 $C_1$-$C_4$-Alkoxy, Benzyloxy oder einen Rest der Formel

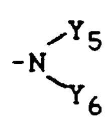

R10 Wasserstoff, Methyl, Ethyl, Propyl, Butyl, Methoxy, Ethoxy, Dimethylamino oder Diethylamino oder

R9 und R10 Glieder, die zusammen mit dem Benzolring, an den sie gebunden sind, zur Vervollständigung eines Ringsystems der Formel

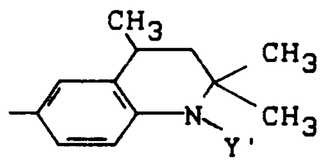 , 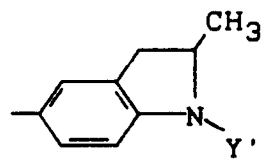

oder 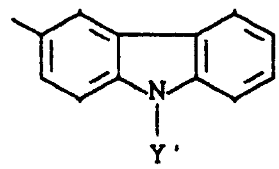

erforderlich sind,

Y' $C_1$-$C_{12}$-Alkyl und

$Y_5$ und $Y_6$ unabhängig voneinander $C_1$-$C_{12}$-Alkyl, Phenyl oder Benzyl bedeuten.

Geeignete (Chlor)Kohlenwasserstoffe für die erfindungsgemäßen Lösungen sind hochsiedende (150-400 °C) (Chlor)-Kohlenwasserstoffe, die bei Raumtemperatur flüssig sind, z.B. Paraffine, insbesondere $C_{10}$-$C_{20}$-n-Paraffine, $C_{10}$-$C_{20}$-iso-Paraffine und $C_{10}$-$C_{17}$-Chlorparaffine mit 15-70 Gew.-% Chlorgehalt sowie ihre technischen Gemische, z.B. Kerosin ($C_{10}$-$C_{16}$-Paraffin) oder Weißöle (50-70 % Paraffine und 30-50 % Naphthene), aromatische Kohlenwasserstoffe, die Alkylgruppen mit vorzugsweise 1-18 Kohlenstoffatome enthalten, wie Alkyl-biphenyl, insbesondere iso-Propylbiphenyl, tert.-Butylbiphenyl, Dialkyl-biphenyl, insbesondere Di-isopropylbiphenyl und Di-tert.-butyl-biphenyl, Alkyl-und Dialkyl-naphthalin, insbesondere iso-Propyl-naphthalin und Di-tert.-butyl-naphthalin, Alkylbenzol, insbesondere Dodecylbenzol, hydrierte und teilhydrierte Terphenyle, insbesondere Cyclohexyldiphenyl, Diarylalkane, insbesondere Diphenylethan oder Ethyldiphenylmethan.

Geeignete Ester der Phthalsäure sind z.B. solche von $C_2$-$C_{18}$-aliphatischen Alkoholen, insbesondere Dibutylphthalat.

Bevorzugte hochkonzentrierte Lösungen enthalten 10-50 Gew.-%, insbesondere 10-35 Gew.-% Farbbildner.

Ein weiterer Gegenstand der Erfindung ist ein Verfahren zur Herstellung der Verbindungen der Formel (I), dadurch gekennzeichnet, daß man bevorzugt in einer Eintopfreaktion Ketone der Formel

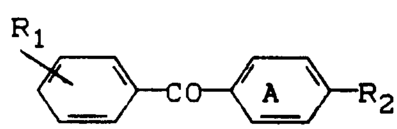 (IV)

mit Aminen der Formel

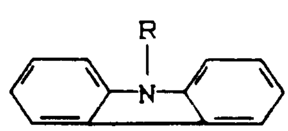 (V)

oder Ketone der Formel

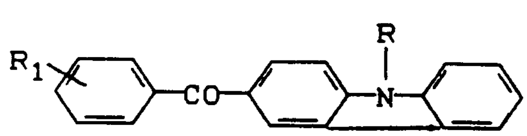 (VI)

mit Aminen der Formel

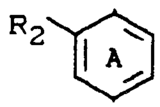

(VII)

in Gegenwart eines Kondensationsmittels, das ein Anion $An^{\ominus}$ liefert, zu den Farbsalzen der Formel

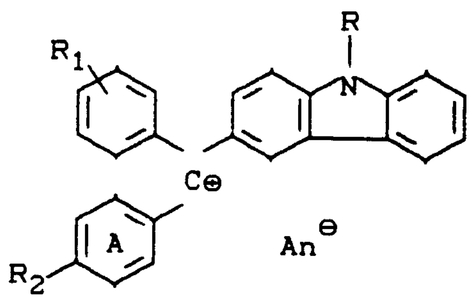

(VIII)

kondensiert, worin

A, R, $R_1$ und $R_2$ die vorgenannte Bedeutung haben, und

$An^{\ominus}$ ein Anion aus der Reihe Cl, Br, Acetat, Sulfat oder Phosphat bedeuten, und

diese ohne Zwischenisolierung mit den Basen der Formel

Me X (IX)

worin

X die vorgenannte Bedeutung hat, und

Me ein Alkali- oder Erdalkaliion, insbesondere Natrium oder Kalium bedeutet,

in einem für die Umsetzungen üblichen organischen Reaktionsmedium umsetzt, ein wasserunlösliches Lösungsmittel zusetzt und nach der Reaktion gegebenenfalls nach Zusatz von Wasser die entstehenden Schichten abtrennt. Nach Entfernung des niedrig siedenden Lösungsmittels aus der organischen Phase erhält man

a) bei Verwendung von niedrigsiedenden, wasserunlöslichen Lösungsmitteln, direkt die Farbbildner in sehr reiner Form oder

b) bei Verwendung von niedrigsiedenden und hochsiedenden, wasserunlöslichen Lösungsmitteln, direkt die gebrauchsfertigen, hochkonzentrierten Lösungen.

Als Kondensationsmittel werden dabei vorzugsweise Phosphoroxychlorid und/oder Diphosphorpentoxid eingesetzt.

Geeignete Reaktionsmedien sind polare Lösungsmittel wie Dimethylformamid, Dimethylsulfoxid, Hexamethyl-phosphorsäure-triamid und Alkanole. Bevorzugt sind Dimethylformamid und $C_1$-$C_{18}$-Alkanole.

Geeignete Reaktionstemperaturen liegen zwischen 20 und 120 ° C, bevorzugt sind 30-80 ° C.

Geeignete niedrigsiedende (40-145 ° C), wasserunlösliche Lösungsmittel sind Kohlenwasserstoffe wie Dichlormethan, Chloroform, Tetrachlorkohlenstoff, 1,2-Dichlorethan, Benzol, Toluol, Xylol und Chlorbenzol.

Die Triarylmethan-Farbbildner der Formel (I) sind normalerweise farblos oder höchstens schwach gefärbt.

Es zeigte sich, daß die Farbbildner der Formel (I) in den genannten wasserunlöslichen organischen Lösungsmitteln überraschend gut löslich sind. Es können Lösungen mit einem Farbbildner-Gehalt bis zu 50 Gew.-% erhalten werden.

Die erhaltenen Farbbildner-Lösungen können ohne weitere Reinigung in den Handel gebracht und in druckempfindlichen Aufzeichnungsmaterialien, insbesondere in mikroverkapselten Materialien eingesetzt werden.

Sie besitzen auch bei Temperaturschwankungen eine ausgezeichnete Stabilität.

Zur Verwendung in den Aufzeichnungsmaterialien werden sie mit den Lösungsmitteln der erfindungsgemäßen Lösungen auf Konzentrationen von etwa 3-10 Gew.-% verdünnt.

Die erfindungsgemäßen Verbindungen sowie ihre Lösungen ergeben bei Kontakt mit einem sauren Entwickler, d.h. einem Elektronenakezptor, intensive blaue, grünblaue, grüne, violette oder rote Farbtöne, die ausgezeichnet sublimations- und lichtecht sind. Durch Mischungen untereinander lassen sich marineblaue, graue oder schwarze Färbungen erzielen.

Sie sind auch wertvoll im Gemisch mit einem oder mehreren anderen bekannten Farbbildnern, z.B. 3,3-Bis-(amino-phenyl)-phthaliden, 3,3-Bis-(indolyl)-phthaliden, 3-Amino-fluoranen, 2,6-Diamino-fluoranen, Leukoauraminen, Spiropyranen, Spirodipyranen, Chromenoindolen, Phenoxazinen, Phenothiazinen, Carbazolylmethanen oder anderen Triarylmethanleukofarbstoffen, um grüne, violette, blaue, marineblaue, graue oder schwarze Färbungen zu ergeben.

Sie zeigen sowohl auf phenolischen Unterlagen als auch auf aktivierten Tonen eine gute Farbintensität, hohe Lichtechtheit und ausgezeichnete Alterungs- und CB-Stabilität. Sie eignen sich für druckempfindliches Aufzeichnungsmaterial, das sowohl Kopier- als auch Registriermaterial sein kann. Ihre Entwicklungsgeschwindigkeit ist in Abhängigkeit von den Substituenten unterschiedlich. Im allgemeinen zeichnen sie sich jedoch durch eine hohe Entwicklungsgeschwindigkeit aus bei gleichzeitig reduzierter Empfindlichkeit der Aufzeichnungsmaterialien gegenüber unbeabsichtigter vorzeitiger Entwicklung.

Ein druckempfindliches Material besteht beispielsweise aus mindestens 1 Paar von Blättern, die mindestens einen Farbbildner der Formel (I), gelöst oder dispergiert in einem nichtflüchtigen organischen Lösungsmittel, und einen sauren Entwickler enthalten.

Solche Verfahren und Zubereitungen sind beispielsweise aus den US-Patentschriften 2 800 457, 2 800 458, 2 948 753, 3 096 189 und 3 193 404 und aus den deutschen Offenlegungsschriften 2 555 080 und 2 700 937 bekannt.

Um eine frühzeitige Aktivierung der in dem druckempfindlichen Aufzeichnungsmaterial vorhandenen Farbbildner zu verhindern, werden diese vorzugsweise in Mikrokapseln eingeschlossen, die sich in der Regel durch Druck zerbrechen lassen.

Als Kapselwandmaterialien eignen sich z.B. Gelatine/Gummi arabicum, Polyamide, Polyurethane, Polysulfonamide, Polyester, Polycarbonate, Polysulfonate, Polyacrylate und Phenol-, Melamin- oder Harnstoff-Formaldehyd-Kondensate, wie sie beispielsweise in M. Gutcho, Capsule Technology and Microencapsulation, Noyes Data Corporation 1972, G. Baxter, Microencapsulation, Processes and Applications, Herausgeber J.E. Vandegaar und den deutschen Offenlegungsschriften 2 237 545 und 2 119 933 beschrieben sind.

Bevorzugt werden beim erfindungsgemäßen Verfahren Mikrokapseln verwendet, deren Hüllen aus Polyadditionsprodukten aus Poly-Isocyanaten und Polyaminen bestehen.

Zur Herstellung derartiger Mikrokapseln einzusetzende Isocyanate sind Diisocyanate, Polyisocyanate, Diisocyanate mit Biuretstruktur, durch di- oder trifunktionelle Alkohole modifizierte Polyisocyanate oder andere modifizierte Isocyanate, z.B. solche der Formel

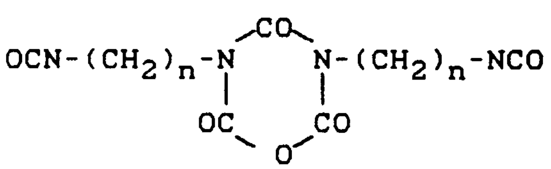

(XIV)

$n = 3\text{-}6.$

Zur Umsetzung mit den genannten Isocyanaten geeignete Diamine sind aliphatische primäre oder sekundäre Di-und Polyamine.

Isocyanate, Amine, Lösungsmittel und ein geeignetes Herstellungsverfahren für solche Mikrokapseln sind beispielsweise in DE-OS 32 03 059 beschrieben.

Thermoreaktive Aufzeichnungssysteme umfassen z.B. wärmeempfindliche Aufzeichnungs- und Kopiermatieralien und -papiere.

Ein solches Material ist beispielsweise in der deutschen Offenlegungsschrift 2 555 080 beschrieben.

Als Entwickler eignen sich die gleichen Elektronenakzeptoren wie sie in druckempfindlichen Papieren verwendet werden, vorzugsweise phenolische Verbindungen, die beispielsweise in der DE-PS 1 251 348 beschrieben sind, sowie Borsäure und organische, vorzugsweise aliphatische Dicarbonsäuren.

Ein weiteres geeignetes thermoreaktives Entwicklungssystem ist in DE-OS 3 337 296 beschrieben, bei dem sauer modifizierte Polymerisate vorzugsweise des Acrylnitrils als Entwickler wirken.

Beispiel 1

37,4 g (0,13 Mol) 4-(N-Methyl-N-phenylamino)-benzophenon und 25,6 g (0,13 Mol) 9-Ethyl-carbazol werden in 96,6 g (0,63 Mol) Phosphoroxychlorid suspendiert und bei Raumtemperatur mit 30 g Phosphorpentoxid versetzt. Die Reaktionsmischung wird 18 Stunden bei 60 °C verrührt und nach dem Abkühlen auf 10 bis 15 °C in 500 ml Methanol eingerührt, so daß die Temperatur 40 °C nicht übersteigt. Man gibt 300 ml Toluol zu und tropf innerhalb einer Stunde zur Farbstofflösung 550 g 30 %ige Natriummethylat-Lösung. Die Mischung wird 2 Stunden bei 40 °C verrührt und dann auf 500 ml Wasser ausgetragen. Man trennt die organische Phase ab und entfernt das Lösungsmittel im Wasserstrahlvakuum. Zum Rückstand gibt man 200 ml Methanol zu und rührt kurz. Abfiltrieren und Trocknen im Vakuum bei 30 °C liefert 54,5 g (84,4 % d.Th.) hellbeiges Kristallisatpulver vom Schmp.: 75-78 °C und der Formel

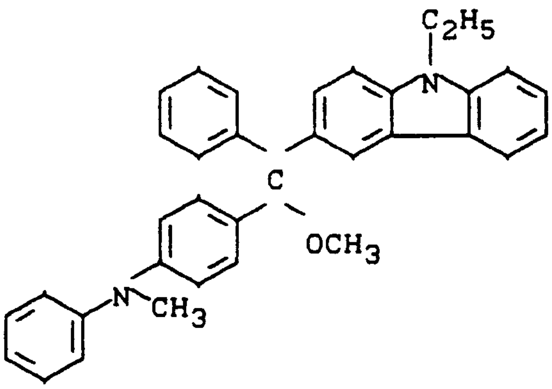

(1)

Eine Lösung in Eisessig wird grün mit $\lambda_{max}$ = 610 nm und $\lambda_2$ = 428 nm.

Beispiel 2

Zur Suspension von 96,6 g (0,63 Mol) Phosphoroxychlorid und 28,8 g (0,2 Mol) Phosphorpentoxid, 98,5%ig, werden portionsweise 42,6 g (0,13 Mol) 4-(N-Methyl-N-phenylamino)benzophenon, 87,7%ig, hinzugefügt, wobei die Temperatur auf 30-35 °C ansteigt. Zur Mischung werden schließlich binnen 10 Min. 24 g (0,12 Mol) 9-Ethylcarbazol, 98,5%ig, getropft. Es wird auf 70 °C erwärmt und 15 Stunden bei dieser Temperatur verrührt. Unter gutem Rühren wird die auf 20-25 °C abgekühlte Schmelze dann langsam in 450 ml Methanol eingetragen. Unter Außenkühlung wird die Zugabe so geregelt, daß eine Temperatur von 50 °C nicht überschritten wird. Zur methanolischen Farbstofflösung werden nacheinander 90 g Di-isopropylnaphthalin und 100 ml Toluol hinzugefügt. Anschließend werden 373,2 g (2,8 Mol) 30%ige Natronlauge so zugetropft, daß sich die Temperatur bei ca. 40 °C einstellt. Die Mischung wird dann 3 Stunden bei 40 °C verrührt. Danach werden 300 ml Wasser zugetropft und 30 Min. verrührt. Die sich unten abscheidende wäßrigmethanolische Phase wird abgetrennt.

Aus der abgetrennten organischen Phase werden im Wasserstrahlvakuum bei ca. 18-20 mbar und bis zu einer Temperatur von 60 °C azeotrop Toluol und Restwasser entfernt. Auf diese Weise erhält man 157 g einer dunkelgelblichen Lösung, die nach $E^1$-Messung in Eisessig 38% Farbbildner enthält. Aus dem $^1$H-NMR-Spektrum geht hervor, daß der Farbbildner aus einem Gemisch von ca. 90% 1-Methoxy-1-[9-ethylcarbazol-3-yl]-[4-N-methyl-N-phenylamino-phenyl]-phenylmethan der Formel (1) und ca. 10% Carbinolbase (Formel 1 statt $OCH_3$/OH) besteht.

Die Lösung läßt sich leicht mit weiterem Di-isopropylnaphthalin, Chlorparaffin ($C_{12}$-$C_{18}$-n-Paraffin ca. 45% Chlor), Sesamöl oder Leinöl auf Einsatzkonzentrationen in Aufzeichnungsmaterialien von 3%, 5% oder 7% verdünnen. Auf Säureton oder Bisphenol A erhält man kräftige dunkelgrüne Farbtöne.

Beispiel 3

Zur vorgelegten Suspension von 15 g (0,05 Mol) Phenyl(9-ethyl-carbazol-3-yl)-keton und 9,0 g (0,05 Mol) 9-Ethyl-carbazol, 98,5%ig, in 38,2 g (0,25 Mol) Phosphoroxychlorid werden bei Raumtemperatur portionsweise 14,2g(0,1 Mol) Phosphorpentoxid hinzugefügt. Die Reaktionsmischung wird auf 40 ° C erwärmt und bei dieser Temperatur 20 Stunden verrührt. Danach wird die auf Raumtemperatur abgekühlte Schmelze in 170 ml Methanol eingerührt. Bei 40 ° C werden langsam 143 g (1,07 Mol) 30%ige Natronlauge zugetropft. Die Mischung wird 2 Stunden bei 40 ° C nachgerührt, mit 100 ml Wasser versetzt und auf 10-15 ° C abgekühlt. Abfiltrieren, Waschen mit Wasser und Trocknen im Vakuum bei 30 ° C liefert 24,5 g hellgelbes Kristallpulver vom Schmp: 95-98 ° C. Das Produkt besteht aus einem Gemisch von überwiegend Carbinolbasenmethylether und Carbinolbase der Formel

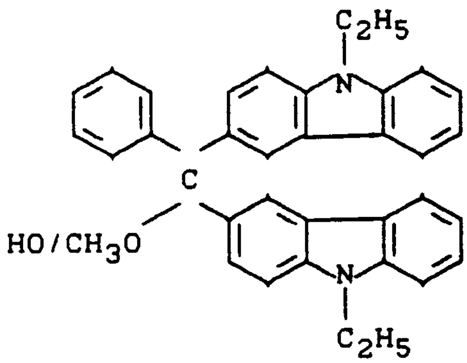

(2).

Durch Umlösen aus Isopropanol erhält man 18 g fast farblose Kristalle vom Schmp: 115 - 119 ° C. Eine Lösung in Eisessig wird blaugrün mit $\lambda_{max}$ = 630 nm und $\lambda_2$ = 434 nm.

Beispiel 4

14,4 g (0,05 Mol) 2-Chlor-4'-N,N-diethylamino-benzophenon und 9,8 g (0,05 Mol) 9-Ethyl-carbazol werden in 38,2 g (0,25 Mol) Phosphoroxychlorid vorgelegt. Bei Raumtemperatur werden langsam 14,2 g (0,1 Mol) Phosphorpentoxid zugegeben und bei 70 ° C 24 Stunden verrührt. Danach wird die Schmelze auf 1000 ml Eiswasser ausgetragen und 2 Stunden gerührt bis der Farbstoff sich kristallin abscheidet. Nach Abfiltrieren, Waschen mit Wasser und Trocknen im Vakuum bei 40 ° C erhält man 12,3 g (89% d. Theorie) dunkelblaue Kristalle vom Schmp: 57-60 ° C.

20 g (0,04 Mol) dieses Farbstoffes werden in 80 ml Dimethylformamid gelöst. Zur Lösung werden langsam bei Raumtemperatur 21,6 g (0,12 Mol) 30%ige Natriumethylat-Lösung getropft. Es wird 1 Stunde bei 40 ° C nachgerührt, abfiltriert und das Filtrat auf 1000 ml Eiswasser ausgetragen. Nach Zugabe von 50 g Natriumchlorid wird der ausgefallene Niederschlag abgesaugt, mit Wasser gewaschen und getrocknet. Ausb.: 14,3 g (71,0 % d. Theorie) hellgelbe Kristalle vom Schmp.: 105-110 ° C und der Formel:

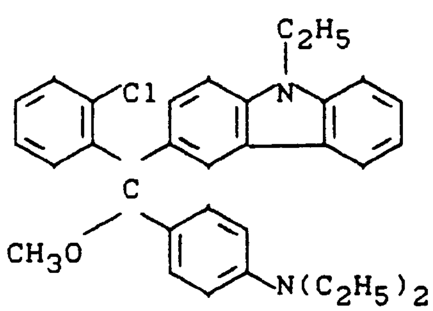

(3).

11,4 g des feuchten Preßkuchens des Carbinolbasenmethylethers der Formel (4) werden mit 32 g Diisopropyl-naphthalin gelöst. Nach Entfernen des Restwassers im Vakuum bei 40-50 ° C erhält man eine Lösung, die ca. 20% Farbbildner enthält.

Eine Lösung in Essigsäure wird blau mit $\lambda_{max}$ = 604 nm. Auf Säureton wird eine kräftige blaue Farbe mit hohen Echtheiten entwickelt.

Beispiel 5

Analog den Beispielen 1, 3 und 4 werden folgende Farbbildner hergestellt.

Tabelle 1

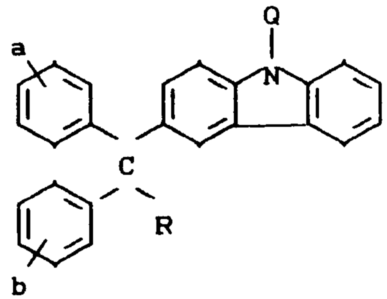

| Formel Nr. | a | b | Q | R | Farbton auf Säureton oder Bisphenol A | $\lambda_{max}$ in Eisessig |
|---|---|---|---|---|---|---|
| 4 | 4-$C_4H_9$ | 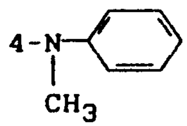 | $C_6H_{13}$ | $OCH_3$/OH | grün | 612 nm |
| 5 | 2-Cl | 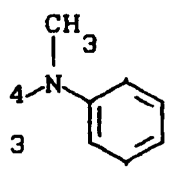 | $C_4H_9$ | $OC_2H_5$/OH | grünstichiges Blau | 605 nm |
| 6 | 4-Cl | 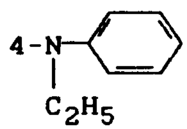 | $C_2H_5$ | OH | grün | 624 nm |

Tabelle 1 (Fortsetzung)

| Formel Nr. | a | b | Q | R | Farbton auf Säureton oder Bisphenol A | $\lambda_{max}$ in Eisessig |
|---|---|---|---|---|---|---|
| 7 | 4-$C_4H_9$ | 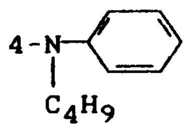 | $C_4H_9$ | $OC_2H_4OCH_3$ | dunkelgrün | 614 nm |
| 8 | 2-$C_4H_9$ | 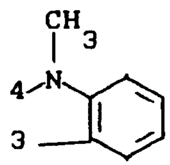 | $C_8H_{17}$ | $OC_4H_9$ | grün | 628 nm |
| 9 | H | 4-$OCH_3$ | $C_4H_9$ | $OC_3H_7$-i | stumpfes blauviolett | 578 nm |
| 10 | H | H | $C_2H_5$ | $OCH_3$/OH | orange | 494 nm |
| 11 | 4-$CH_3$ | 4-$N(C_2H_5)_2$ 2-$OC_2H_5$ | $CH_3$ | $OC_2H_5$/OH | dunkelgrün | 623 nm |
| 12 | H | 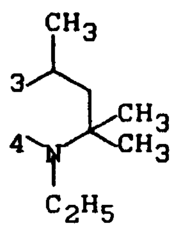 | $C_2H_5$ | $OCH_3$/OH | sehr dunkles blauviolett | 600 nm |

<u>Tabelle 1</u> (Fortsetzung)

| Formel Nr. | a | b | Q | R | Farbton auf Säureton oder Bisphenol A | $\lambda_{max}$ in Eisessig |
|---|---|---|---|---|---|---|
| 13 | 2-Cl | 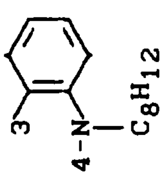 | $C_8H_{17}$ | $OCH_3/OH$ | blau | 602 nm |
| 14 | 4-Cl | 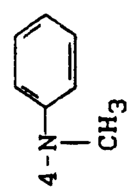 | $C_2H_5$ | $OCH_3/OH$ | grün | 625 nm |
| 15 | H | 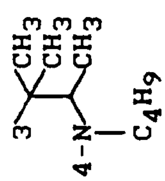 | $C_2H_5$ | $OC_4H_9$ | dunkel blauviolett | 602 nm |
| 16 | H | 4-$N(CH_3)_2$ 2-$N(CH_3)_2$ | $C_8H_{17}$ | $OCH_3/OH$ | kräftiges stumpfes blauviolett | 596 nm |
| 17 | 2-Cl | 4-$OCH_3$ 3-$OCH_3$ | $C_2H_5$ | $OCH_3/OH$ | blauviolett | 583 nm |

<u>Beispiel 6</u>

5 g des Farbbildners der Formel des Beispiels 1 werden in einem Gemisch aus 60 g Dodecylbenzol und 40 g Chlorparaffin mit 45% Cl-Gehalt gelöst. 223 g einer solchen Lösung werden mit 39,5 g Oxadiazintrion von Desmodur® H (NCO-Gehalt 20,5%) vermischt. Anschließend erfolgt die Vermischung mit 320 g 0,5%iger Polyvinylalkohollösung und die Emulgierung im Schergefälle eines Rotor/Stator-Emulgiergeräts. Die Vernetzung erfolgt mit 76 g 9,0%iger Diethylentriaminlösung. Die Nachbehandlung erfolgt durch Erwärmen der Dispersion auf 60 °C und dreistündiges Rühren bei 60 °C. Es wird dabei eine 40% Kapseln enthaltende Dispersion der Kapselgroße 7,3 µm erhalten.

250 ml dieser Dispersion wird vorgelegt und unter intensivem Rühren 40 g Cellulosefeinschliff (Arbocell BE 600/30 der Firma Rettenmeier und Söhne) langsam eingestreut. Nach mindestens 30 minütigem intensivem Rühren erfolgt die Zugabe von 40 ml 50%iger SBR-Latex (Baystal® P 1600 der Fa. BAYER AG.) Die resultierende 48,5%ige Streichfarbe wird mit Wasser auf 30% Feststoffgehalt verdünnt und mit einer Luftbürste auf die Rückseite eines handelsüblichen Basis-Papiers gestrichen. Der Auftrag beträgt nach dem Trocknen 5 g/m².

Das so bestrichene Papier wird mit der beschichteten Seite auf die mit Entwicklersubstanz beschichtete Seite eines handelsüblichen kohlenfreien Durchschreibepapiers gelegt. Bei Ausführung eines Schreibdrukkes auf das mit Kapseln beschichtete Papier ergibt sich auf dem Durchschreibepapier eine grüne Durchschrift, die am Licht stabil ist.

## Beispiel 7

Verwendet man 5 g aus einem Gemisch des Beispiels 2 und arbeitet man analog Beispiel 6, so erhält man ein mit Mikrokapseln beschichtetes Papier, das in analoger Weise einen kräftige, dunkelgrüne Durchschrift ergibt, die sehr lichtecht ist.

## Beispiel 8

Verwendet man 5 g aus einem Gemisch des Beispiels 2 und arbeitet man analog Beispiel 6, so erhält man ein mit Mikrokapseln beschichtetes Papier, das in analoger Weise eine grüne Durchschrift liefert.

## Beispiel 9

Verwendet man 5 g des Farbbildners des Beispiel 4 und arbeitet man analog Beispiel 6, so erhält man ein mit Mikrokapseln beschichtetes Papier, das in analoger Weise eine blaue Durchschrift liefert.

## Beispiel 10

Verwendet man 5 g des Farbbildners der Formel

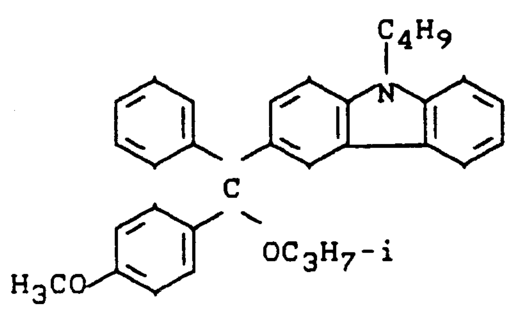

und arbeitet man analog Beispiel 6, so erhält man ein mit Mikrokapseln beschichtetes Papier, das in analoger Weise eine stumpfe, blauviolette Durchschrift liefert, die am Licht etwas verblaßt.

Beispiel 11

Verwendet man 5 g Farbbildners der Formel

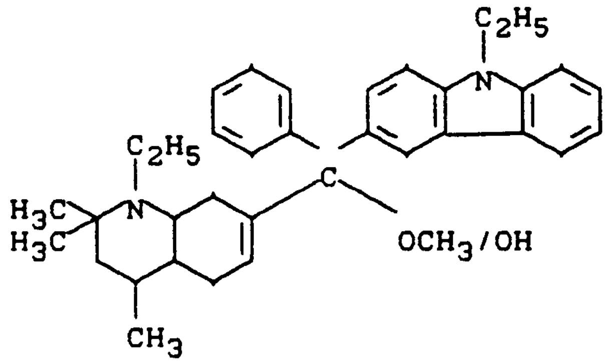

und arbeitet man analog Beispiel 6, so erhält man ein mit Mikrokapseln beschichtetes Papier, das in analoger Weise eine dunkel blauviolette Durchschrift liefert.

Beispiel 12

Verwendet man 5 g des Farbbildners der Formel

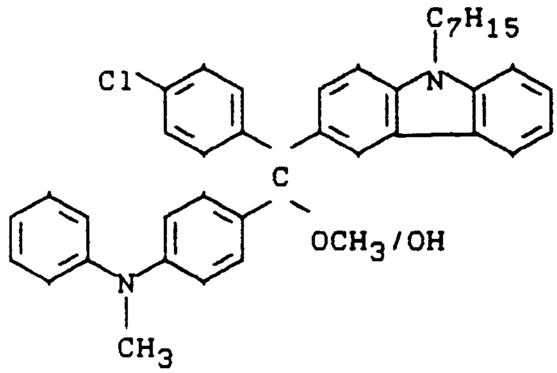

und arbeitet man analog Beispiel 6, so erhält man ein mit Mikrokapseln beschichtetes Papier, das in analoger Weise eine grüne Durchschrift liefert.

Beispiel 13

171 Teile einer ca. 13%igen Lösung einer Polyacrylsäure mit einem mittleren Molekulargewicht unter 300 000 werden mit Triethanolamin auf einem pH-Wert von 4,5 gebracht und mit Wasser auf eine Gesamtmenge von 1000 Teilen gebracht.

Zu dieser Lösung werden 160 Teile eines 90%igen Melamin-Formaldehyd Harzes (Luwipal 68® der Fa. BASF, Ludwigshafen) gegeben.

Anschließend werden 1300 Teile einer Lösung von 5% Farbgeber des Beispiels 2 in Diisopropylnaphthalin (KMC 113 der Fa. Rütgers Kureha Solvent, Duisburg) gegeben und mit einer Mischsirene bei hoher Drehzahl eine Emulsion hergestellt.

Anschließend wird mit 700 Teilen Wasser verdünnt, unter Rühren auf 60 °C erhitzt und 6 h bei 60 ° ausreagiert. Nach Abkühlen der Dispersion wird mit Triethanolamin neutralisiert.

Es wird eine 40%ige Mikrokapseldispersion der mittleren Kapselgröße von 5 µm erhalten.

Beispiel 14

In einer Kugelmühle werden 32 g 4,4'-Isopropyliden-diphenol, 3,8 g Distearylamid des Ethylendiamins, 89 g Kaolin, 20 g eines zu 88% hydrolysierten Polyvinylalkohols und 55 ml Wasser gemahlen, bis die Teilchengröße ca. 5 µm beträgt. In einer zweiten Kugelmühle werden 6 g der Verbindung des Beispiels 4, 3 g eines zu 88% hydrolysierten Polyvinylalkohols und 60 ml Wasser zu einer Teilchengröße von ca. 3 µm gemahlen. Die beiden Dispersionen werden zusammengegeben und mit einem Trockenauftragsgewicht von 5,5 $g/m^2$ auf Papier gestrichen. Durch Berühren des Papiers mit einem erhitzten Kugelschreiber wird eine intensive blaue Farbe erhalten, die eine gute Licht- und Sublimierechtheit hat.

Beispiel 15

Nach DE-OS 3 337 296 werden in einer Kugelmühle 40 g eines feinpulvrigen Polyacrylnitrilpolymerisats, hergestellt aus 94% Acrylnitril, 0,5 % Methallylsulfonsäure und 5,5% Acrylsäuremethylester, mit 225 g einer 8 %igen wäßrige Polyvinylalkohollösung und unter Zusatz von 1,3 g Distearylphosphorsäureester vermahlen. Eine zweite Dispersion wird aus 1 g der Verbindung des Beispiels 1 und 55 g einer 8%igen wäßrigen Polyvinylalkohollösung hergestellt. Man mischt die Dispersion des Farbbildners mit der des Akzeptors im Verhältnis 1/10 und trägt die Mischung auf Cellulosepapier mittels einer Rakel auf und trocknet sie, so daß man ein Auftragsgewicht von 6 bis 7 $g/m^2$ erhält. Das Papier ist mit Schreibmitteln, wie z.B. einem Kugelschreiber, beschriftbar. Es ist gegen starken Druck unempfindlich. Bei Berührung des Papiers mit einem beheizten Stift erhält man eine klare, scharfe, schattenfreie, grüne Schrift. Die Lichtechtheit der Färbung ist ausgezeichnet.

**Patentansprüche**

**1.** Farbbildner der allgemeinen Formel

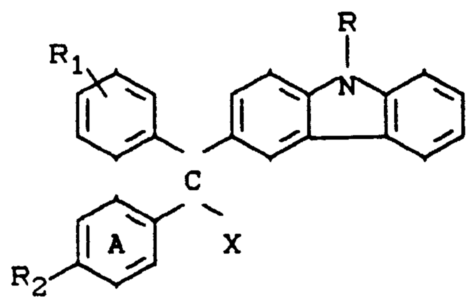

worin

| | |
|---|---|
| X | Hydroxy, Alkoxy, Alkenyloxy, Aralkoxy, Cycloalkoxy, Aryloxy, Acyloxy, Alkylamino, Dialkylamino, Acylamino, Aralkylamino oder Arylamino, |
| R | Alkyl, Alkenyl oder Aralkyl, |
| $R_1$ | Wasserstoff, Halogen oder Alkyl, |
| $R_2$ | Alkoxy, Aralkoxy, Aryloxy oder einen Rest der Formel |

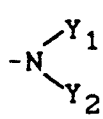

| | |
|---|---|
| $Y_1$ und $Y_2$ | unabängig voneinander Alkyl, Aryl, Cycloalkyl oder Aralkyl bedeuten, oder |
| $R_2$ | mit A in der o-Stellung einen heterocyclischen Ring bildet, |

dem Ring A in o-/m-Stellung zu $R_2$ ein Benzolring anneliert sein kann,
und der Ring A und seine anellierten Ringe und die cyclischen und acyclischen Reste weitere in der Farbstoffchemie übliche, nichtionische Substituenten tragen können.

**2.** Farbbildner gemäß Anspruch 1 der allgemeinen Formel

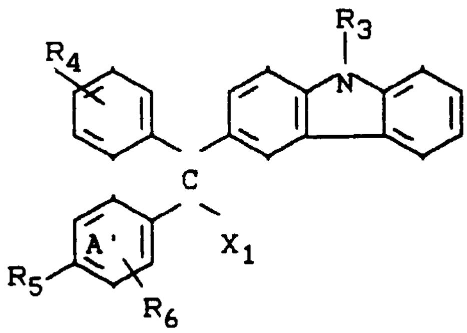

worin

$X_1$ Hydroxy, gegebenenfalls durch $C_1$-$C_4$-Alkoxy substituiertes $C_1$-$C_{12}$-Alkoxy oder Benzyloxy,

$R_3$ $C_1$-$C_{12}$-Alkyl oder Benzyl,

$R_4$ Wasserstoff, Chlor, $C_1$-$C_{12}$-Alkyl,

$R_5$ $C_1$-$C_{12}$-Alkoxy, Benzyloxy, Phenoxy oder einen Rest der Formel

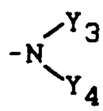

$R_6$ Wasserstoff, Chlor, $C_1$-$C_{12}$-Alkyl, $C_1$-$C_{12}$-Alkoxy, $C_1$-$C_4$-Alkylamino oder Di-$C_1$-$C_{12}$-Alkylamino,

$Y_3$ und $Y_4$ unabhängig voneinander gegebenenfalls durch Chlor, Cyano, $C_1$-$C_4$-Alkoxycarbonyl oder $C_1$-$C_4$-Alkoxy substituiertes $C_1$-$C_{12}$-Alkyl, Cyclohexyl, Phenyl oder Benzyl, die durch Chlor, $C_1$-$C_4$-Alkyl oder $C_1$-$C_4$-Alkoxy substituiert sein können, oder

$R_5$ und $R_6$ Glieder, die zusammen mit Ring A' zur Vervollständigung eines Ringssystems der folgenden Formel

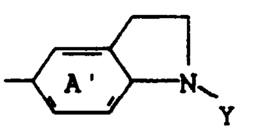 , 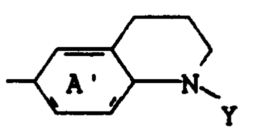 , 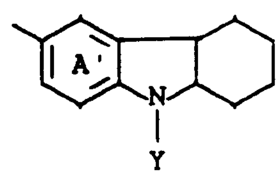

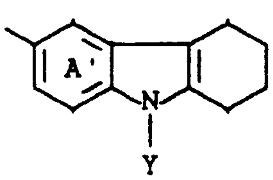 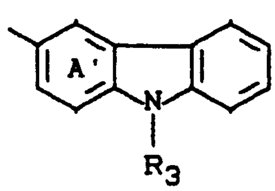

erforderlich sind, bedeuten, worin

Y für $C_1$-$C_{12}$-Alkyl, Cl-$C_2$-$C_4$-alkyl, $C_1$-$C_4$-Alkoxy-$C_2$-$C_4$-alkyl, Phenyl oder Benzyl steht und

der gesättigte Ringteil bis zu 4 Reste aus der Gruppe Chlor, Methyl, Ethyl, Methoxy, Ethoxy oder Phenyl tragen kann.

**3.** Farbbildner gemäß Anspruch 1 der allgemeinen Formel

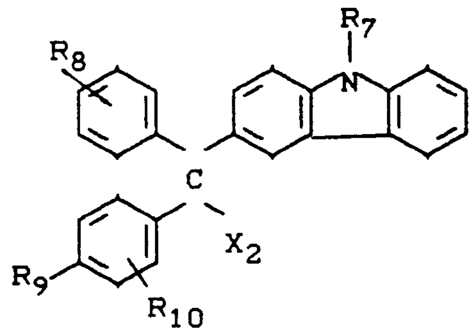

worin

$X_2$ Hydroxy oder $C_1$-$C_{12}$-Alkoxy,

$R_7$ $C_1$-$C_{12}$-Alkyl,

$R_8$ Wasserstoff, Chlor, $C_1$-$C_{12}$-Alkyl,

$R_9$ $C_1$-$C_4$-Alkoxy, Benzyloxy oder einen Rest der Formel

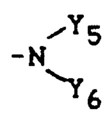

$R_{10}$ Wasserstoff, Methyl, Ethyl, Propyl, Butyl, Methoxy, Ethoxy, Dimethylamino oder Diethylamino oder

$R_9$ und $R_{10}$ Glieder, die zusammen mit dem Benzolring, an den sie gebunden sind, zur Vervollständigung eines Ringsystems der Formel

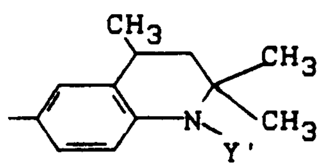

,

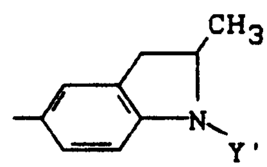

oder

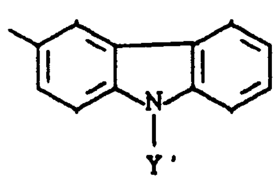

erforderlich sind,

Y' $C_1$-$C_{12}$-Alkyl und

$Y_5$ und $Y_6$ unabhängig voneinander $C_1$-$C_{12}$-Alkyl, Phenyl oder Benzyl bedeuten.

**4.** Hochkonzentrierte Lösungen von Farbbildnern des Anspruchs 1 in wasserunlöslichen organischen Lösungsmitteln aus der Gruppe der gegebenenfalls chlorierten Kohlenwasserstoffe und Phthalsäureester.

**5.** Verfahren zur Herstellung von Farbbildnern des Anspruchs 1, dadurch gekennzeichnet, daß man Ketone der Formel

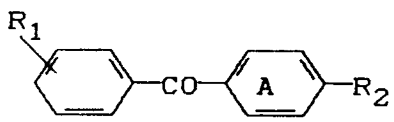

mit Aminen der Formel

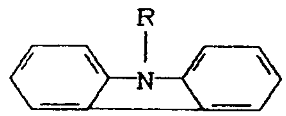

oder Ketone der Formel

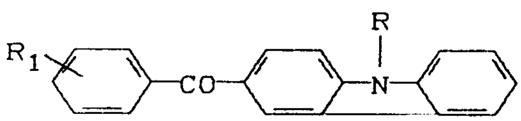

mit Aminen der Formel

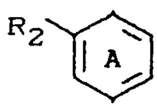

in Gegenwart eines Kondensationsmittels, das ein Anion $A^{\ominus}$ liefert, zu den Farbsalzen der Formel

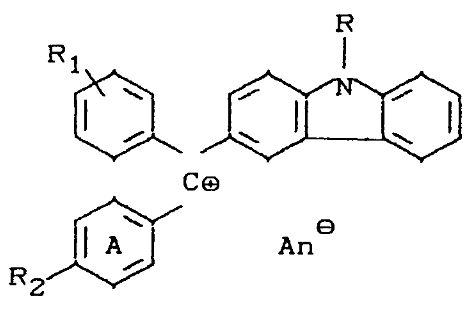

kondensiert, worin

| | |
|---|---|
| A, R, $R_1$ und $R_2$ | die vorgenannte Bedeutung haben, und |
| $An^{\ominus}$ | ein Anion aus der Reihe Cl, Br, Acetat, Sulfat oder Phosphat bedeuten, und |

diese ohne Zwischenisolierung mit den Basen der Formel

Me X

worin

| | |
|---|---|
| X | die vorgenannte Bedeutung hat, und |
| Me | ein Alkali- oder Erdalkaliion bedeutet, |

in einem für die Umsetzungen üblichen organischen Reaktionsmedium umsetzt, ein wasserunlösliches Lösungsmittel zusetzt und nach der Reaktion gegebenenfalls nach Zusatz von Wasser die entstehenden Schichten abtrennt.

**6.** Verfahren zur Herstellung von Lösungen des Anspruchs 4, dadurch gekennzeichnet, daß man die Umsetzungen nach Anspruch 5 in Gegenwart von niedrigsiedenden und hochsiedenden, wasserunlöslichen Lösungsmitteln durchführt, nach Zusatz von Wasser die den Farbbildner enthaltende, organische Phase abtrennt und daraus das niedrigsiedende Lösungsmittel entfernt.

**7.** Verwendung der Farbbildner des Anspruchs 1 in Thermoreaktivpapieren und druckempfindlichen Aufzeichnungsmaterialien.

**8.** Verwendung der Lösungen des Anspruchs 4 in druckempfindlichen Aufzeichnungsmaterialien.

## Claims

**1.** Colour formers of the general formula

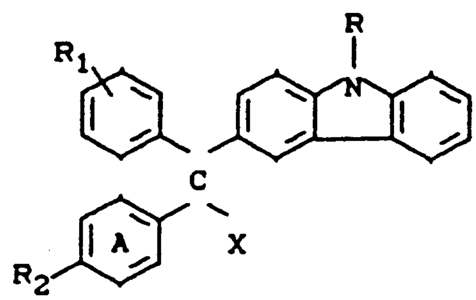

wherein

| | |
|---|---|
| X | denotes hydroxyl, alkoxy, alkenyloxy, aralkoxy, cycloalkoxy, aryloxy, acyloxy, alkylamino, dialkylamino, acrylamino, aralkylamino or arylamino, |
| R | denotes alkyl, alkenyl or aralkyl, |
| $R_1$ | denotes hydrogen, halogen or alkyl, |
| $R_2$ | denotes alkoxy, aralkoxy, aryloxy or a radical of the formula |

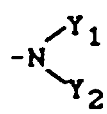

| | |
|---|---|
| $Y_1$ and $Y_2$ | independently of one another denote alkyl, aryl, cycloalkyl or aralkyl, or |
| $R_2$ | combines with the o-position of A to form a heterocyclic ring, |

a benzene ring can be fused onto the ring A, in the o-/m-position relative to $R_2$,
and the ring A and its fused-on rings and the cyclic and acyclic radicals can carry further non-ionic substituents customary in dyestuff chemistry.

**2.** Colour formers according to Claim 1 of the general formula

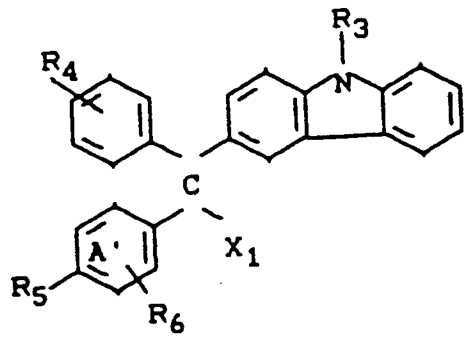

wherein

- $X_1$ denotes hydroxyl, optionally $C_1$-$C_4$-alkoxy-substituted $C_1$-$C_{12}$-alkoxy or benzyloxy,
- $R_3$ denotes $C_1$-$C_{12}$-alkyl or benzyl,
- $R_4$ denotes hydrogen, chlorine or $C_1$-$C_{12}$-alkyl,
- $R_5$ denotes $C_1$-$C_{12}$-alkoxy, benzyloxy, phenoxy or a radical of the formula

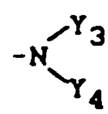

- $R_6$ denotes hydrogen, chlorine, $C_1$-$C_{12}$-alkyl, $C_1$-$C_{12}$-alkoxy, $C_1$-$C_4$-alkylamino or di-$C_1$-$C_{12}$-alkylamino,
- $Y_3$ and $Y_4$ independently of one another denote $C_1$-$C_{12}$-alkyl which is optionally substituted by chlorine, cyano, $C_1$-$C_4$-alkoxycarbonyl or $C_1$-$C_4$-alkoxy, or cyclohexyl, phenyl or benzyl, which can each be substituted by chlorine, $C_1$-$C_4$-alkyl or $C_1$-$C_4$-alkoxy, or
- $R_5$ and $R_6$ denote members which, together with ring A', are required to complete a ring system of the following formula

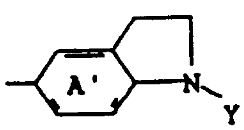 , 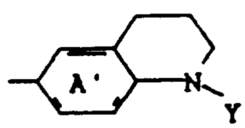 , 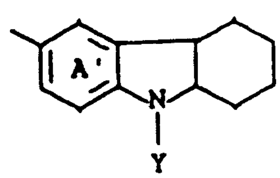

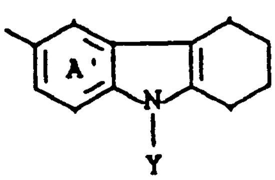 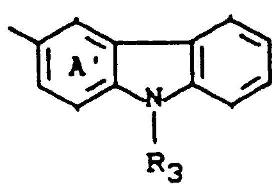

wherein

- Y represents $C_1$-$C_{12}$-alkyl, Cl-$C_2$-$C_4$-alkyl, $C_1$-$C_4$-alkoxy-$C_2$-$C_4$-alkyl, phenyl or benzyl and

the saturated ring component can carry up to 4 radicals from chlorine, methyl, ethyl, methoxy, ethoxy and phenyl.

**3.** Colour formers according to Claim 1 of the general formula

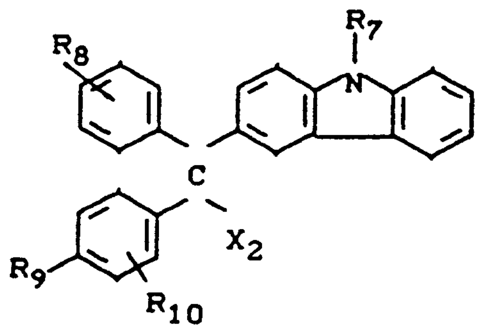

wherein

| | |
|---|---|
| $X_2$ | denotes hydroxyl or $C_1$-$C_{12}$-alkoxy, |
| $R_7$ | denotes $C_1$-$C_{12}$-alkyl, |
| $R_8$ | denotes hydrogen, chlorine or $C_1$-$C_{12}$-alkyl, |
| $R_9$ | denotes $C_1$-$C_4$-alkoxy, benzyloxy or a radical of the formula |

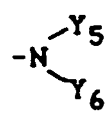

| | |
|---|---|
| $R_{10}$ | denotes hydrogen, methyl, ethyl, propyl, butyl, methoxy, ethoxy, dimethylamino or diethylamino or |
| $R_9$ and $R_{10}$ | denote members which, together with the benzene ring to which they are bonded, are required to complete a ring system of the formula |

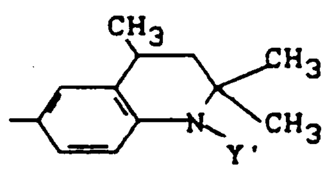

,

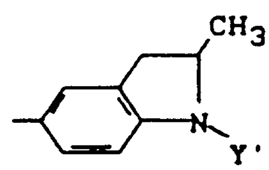

or

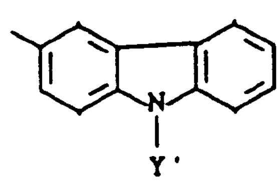

| | |
|---|---|
| Y' | denotes $C_1$-$C_{12}$-alkyl and |
| $Y_5$ and $Y_6$ | independently of one another denote $C_1$-$C_{12}$-alkyl, phenyl or benzyl. |

**4.** Highly concentrated solutions of colour formers of Claim 1 in water-insoluble organic solvents from the group consisting of optionally chlorinated hydrocarbons and phthalic esters.

**5.** Process for the preparation of colour formers of Claim 1, characterized in that ketones of the formula

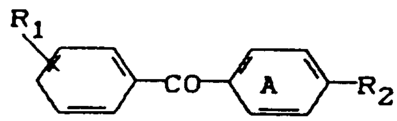

are subjected to a condensation reaction with amines of the formula

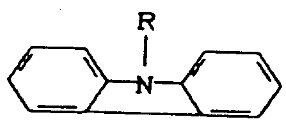

or ketones of the formula

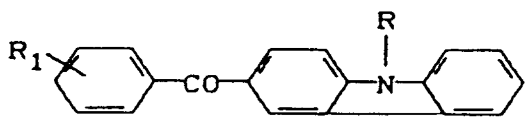

are subjected to a condensation reaction with amines of the formula

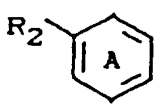

in the presence of a condensing agent which supplies an anion $An^{\ominus}$, to give the dyesalts of the formula

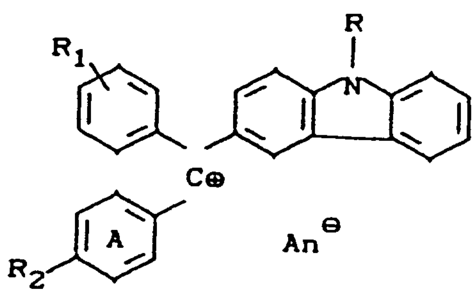

wherein

| | |
|---|---|
| A, R, $R_1$ and $R_2$ | have the abovementioned meaning and |
| $An^{\ominus}$ | denotes an anion from Cl, Br, acetate, sulphate and phosphate, and |

these dyesalts are reacted without intermediate isolation with bases of the formula

Me X

wherein

X has the abovementioned meaning and Me denotes an alkali metal or alkaline earth metal ion, in an organic reaction medium customary for the reactions, a water-insoluble solvent is added and after the reaction, if appropriate after addition of water, the layers formed are separated off.

6. Process for the preparation of solutions of Claim 4, characterised in that the reactions according to Claim 5 are carried out in the presence of low-boiling and high-boiling water-insoluble solvents, and after addition of water the organic phase containing the colour former is separated off and the low-boiling solvent is removed therefrom.

7. Use of the colour formers of Claim 1 in thermo-reactive papers and pressure-sensitive recording materials.

8. Use of the solutions of Claim 4 in pressure-sensitive recording materials.

**Revendications**

1. Chromogènes de formule générale

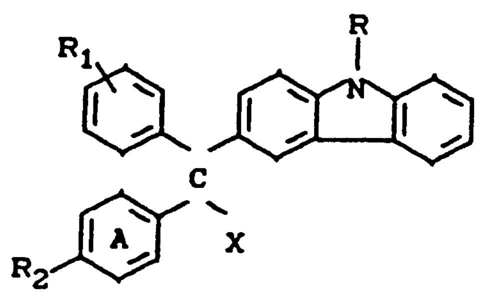

dans laquelle

| | |
|---|---|
| X | est un groupe hydroxy, alkoxy, alcényloxy, aralkoxy, cycloalkoxy, aryloxy, acyloxy, alkylamino, dialkylamino, acylamino, aralkylamino ou arylamino, |
| R | est un groupe alkyle, alcényle ou aralkyle, |
| $R_1$ | est l'hydrogène, un halogène ou un groupe alkyle, |
| $R_2$ | est un groupe alkoxy, aralkoxy, aryloxy ou un reste de formule |

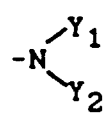

| | |
|---|---|
| $Y_1$ et $Y_2$ | représentent indépendamment l'un de l'autre un groupe alkyle, aryle, cycloalkyle ou aralkyle, ou bien |
| $R_2$ | forme avec A dans la position ortho un noyau hétérocyclique, |

un noyau benzénique peut être condensé avec le noyau A en position ortho/méta par rapport à $R_2$, et le noyau A et ses noyaux condensés et les restes cycliques et acycliques peuvent porter d'autres substituants non ioniques courants dans la chimie des colorants.

**2.** Chromogènes suivant la revendication 1, de formule générale

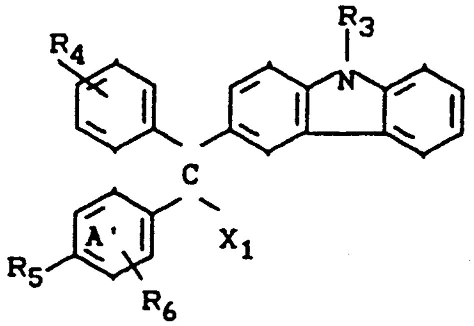

dans laquelle

- $X_1$ est un groupe hydroxy, un groupe alkoxy en $C_1$ à $C_{12}$ éventuellement substitué par un radical alkoxy en $C_1$ à $C_4$, ou un groupe benzyloxy,
- $R_3$ est un groupe alkyle en $C_1$ à $C_{12}$ ou benzyle,
- $R_4$ représente l'hydrogène, le chlore, un groupe alkyle en $C_1$ à $C_{12}$,
- $R_5$ est un groupe alkoxy en $C_1$ à $C_{12}$, benzyloxy, phénoxy ou un reste de formule

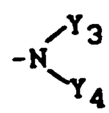

- $R_6$ est l'hydrogène, le chlore, un groupe alkyle en $C_1$ à $C_{12}$, alkoxy en $C_1$ à $C_{12}$, alkylamino en $C_1$ à $C_4$ ou di(alkyle en $C_1$ à $C_{12}$)amino,
- $Y_3$ et $Y_4$ représentent indépendamment l'un de l'autre un groupe alkyle en $C_1$ à $C_{12}$ substitué le cas échéant par du chlore, un radical cyano, (alkoxy en $C_1$ à $C_4$)carbonyle ou alkoxy en $C_1$ à $C_4$, des groupes cyclohexyle, phényle ou benzyle pouvant être substitués chacun par du chlore, un radical alkyle en $C_1$ à $C_4$ ou alkoxy en $C_1$ à $C_4$, ou bien
- $R_5$ et $R_6$ sont des chaînons qui sont nécessaires pour compléter conjointement avec le noyau A' un système cyclique de formule suivante

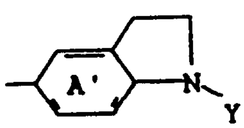 , 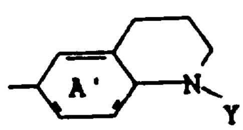 , 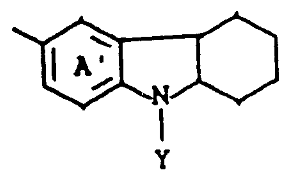

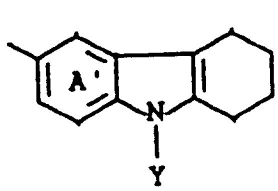 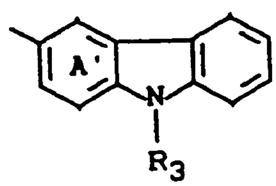

où

- Y est un groupe alkyle en $C_1$ à $C_{12}$, Cl-alkyle en $C_2$ à $C_4$, (alkoxy en $C_1$ à $C_4$)-(alkyle en $C_2$ à $C_4$, phényle ou benzyle,

la partie saturée du noyau peut porter jusqu'à 4 restes de la série chloro, méthyle, éthyle, méthoxy, éthoxy ou phényle.

**3.** Chromogènes suivant la revendication 1, de formule générale

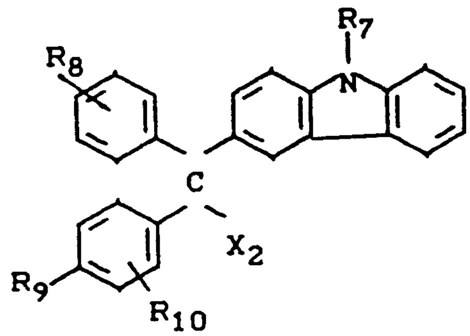

dans laquelle

$X_2$ est un groupe hydroxy ou alkoxy en $C_1$ à $C_{12}$,

$R_7$ est un groupe alkyle en $C_1$ à $C_{12}$,

$R_8$ est l'hydrogène, le chlore, un groupe alkyle en $C_1$ à $C_{12}$,

$R_9$ est un groupe alkoxy en $C_1$ à $C_4$, benzyloxy ou un reste de formule

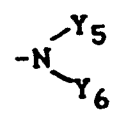

$R_{10}$ est l'hydrogène, un groupe méthyle, éthyle, propyle, butyle, méthoxy, éthoxy, diméthylamino ou diéthylamino, ou bien

$R_9$ et $R_{10}$ sont des chaînons qui sont nécessaires pour compléter, conjointement avec le noyau benzénique auquel ils sont liés, un système cyclique de formule

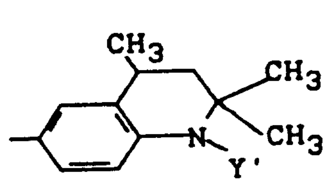

,

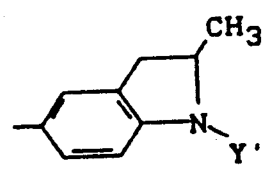

ou

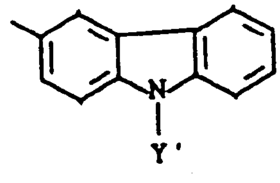

Y' est un groupe alkyle en $C_1$ à $C_{12}$ et

$Y_5$ et $Y_6$ représentent indépendamment l'un de l'autre un groupe alkyle en $C_1$ à $C_{12}$, phényle ou benzyle.

**4.** Solutions fortement concentrées de chromogènes suivant la revendication 1 dans des solvants organiques insolubles dans l'eau du groupe des hydrocarbures éventuellement chlorés et des esters de l'acide phtalique.

5. Procédé de production de chromogènes suivant la revendication 1, caractérisé en ce qu'on condense des cétones de formule

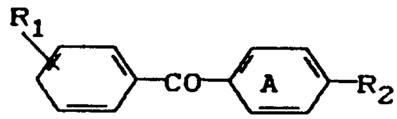

avec des amines de formule

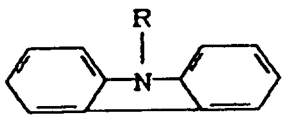

ou bien des cétones de formule

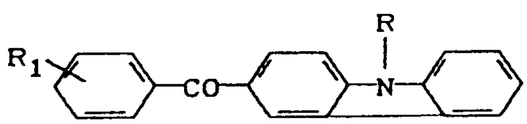

avec des amines de formule

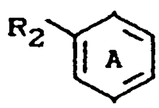

en présence d'un agent de condensation qui fournit un anion $A^{\ominus}$ en des sels colorés de formule

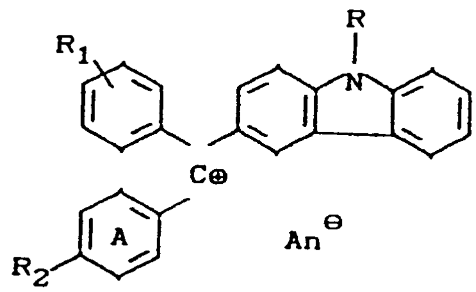

où

A, R, $R_1$ et $R_2$ ont la définition indiquée ci-dessus, et

$An^{\ominus}$ désigne un anion de la série Cl, Br, acétate, sulfate ou phosphate et

on fait réagir ces sels sans isolement intermédiaire avec les bases de formule

Me X

dans laquelle

X a la définition mentionnée ci-dessus et

Me est un ion alcalin ou alcalino-terreux,

dans un milieu réactionnel organique d'emploi classique pour les réactions, on ajoute un solvant insoluble dans l'eau et après la réaction, on sépare les phases produites, éventuellement après addition d'eau.

**6.** Procédé de préparation de solutions suivant la revendication 4, caractérisé en ce qu'on conduit les réactions suivant la revendication 5 en présence de solvants insolubles dans l'eau, de bas point d'ébullition et de haut point d'ébullition, on sépare après addition d'eau la phase organique contenant le chromogène, et on en élimine le solvant de bas point d'ébullition.

**7.** Utilisation des chromogènes suivant la revendication 1 dans des papiers thermoréactifs et des supports d'enregistrement sensibles à la pression.

**8.** Utilisation des solutions suivant la revendication 4 dans des supports d'enregistrement sensibles à la pression.